# EUROPEAN PATENT APPLICATION

(11) **EP 4 451 464 A1**
(43) Date of publication of application: **23.10.2024**
(21) Application number: 23168577.7
(22) Date of filing: 18.04.2023
(51) Int. Cl.: H01Q 1/32, H01Q 21/00, H01Q 21/28, H01Q 21/30, G01S 13/931, H01Q 21/24

(54) **MULTI-MODE RADAR SYSTEM WITH HIGH ISOLATION BETWEEN MODES**

(71) Applicant: Aptiv Technologies AG, 8200 Schaffhausen (CH)
(72) Inventor: Vollbracht, Dennis, 40721 Hilden (DE); Razi, Navid, 42119 Wuppertal (DE); Varma, Sachit, 47228 Duisburg (DE)
(74) Representative: Manitz Finsterwald Patent- und Rechtsanwaltspartnerschaft mbB

(57) **Abstract**

A multi-mode radar system with high isolation between modes is described herein. The radar system comprises a feed portion configured to propagate electromagnetic energy along an energy path. Connected to the feed portion is a divider portion that splits the energy path into a first energy path corresponding to first antennas and a second energy path corresponding to second antennas. The second antennas have one or more of: different operating frequencies, different polarizations, or different fields of view than the first antennas. By using respective filters in the first and second antenna portions, the radar system achieves multi-mode use (e.g., muti-frequency, multi-polarization, and/or multi-field-of-view) with high isolation between the modes. Furthermore, using a single feed port may save cost, have lower complexity, and allow for better space utilization.

## Description

### BACKGROUND

Some devices (e.g., radar devices) use electromagnetic (EM) signals to detect and track objects. The EM signals are transmitted and received using antennas which may be characterized in terms of gains, beam widths, or, more specifically, in terms of antenna patterns, which are measures of the antenna gains as functions of directions. Waveguides are often used to propagate the EM signals to all or specific antennas in the system, in order to change or improve the antenna patterns with respect to an application.

Often times, radar systems and their components (e.g., waveguides, antennas) are configured for single-mode use (e.g., a single frequency, a single polarization direction, and a single field of view). As such, in systems where multiple modes are desired (e.g., multiple frequencies, multiple polarizations, and/or multiple fields of view), multiple radar systems and waveguides may be used with respective feed ports and associated components (e.g., circuitry, channels). Each additional mode may require more space and may increase cost and/or complexity of the system.

### SUMMARY

This document is directed to a multi-mode radar system with high isolation between the operating modes. Some aspects described below include a radar system comprising a feed portion configured to propagate electromagnetic energy along an energy path. The radar system further comprises a divider portion connected to the feed portion that splits the energy path into a first energy path and a second energy path. The radar system also comprises a first antenna portion comprising one or more first antennas connected to the first energy path and a second antenna portion comprising one or more second antennas connected to the second energy path. The second antennas have one or more of: different operating frequencies than the first antennas, different polarizations than the first antennas, or different fields of view than the first antennas.

In some implementations, the radar system further comprises a first filter portion in the first energy path configured to reject electromagnetic energy associated with the second antennas. The first filter portion may be a low-pass filter portion, such as a notch in a wall of the first antenna portion. The notch may be rectangular, trapezoidal, or comprise side walls that are curved.

In some implementations, the radar system further comprises a second filter in the second energy path configured to reject electromagnetic energy associated with the first antennas. The second filter may comprise a high-pass filter portion such as a filter wall offset from a wall of the second antenna portion, a series of irises, or a narrower profile than that of the second antenna portion existing the divider portion.

In some implementations, the feed portion, the divider portion, the first antenna portion, and the second antenna portion are comprised by a waveguide. The waveguide may be a substrate integrated waveguide (SIW), or an air waveguide (AWG).

In some implementations, the divider portion is configured such that the second antenna portion is connected to the divider portion at a right angle from the feed portion and the first antenna portion.

Some aspects described below include a waveguide that comprises a feed portion configured to propagate low-frequency electromagnetic energy and high-frequency electromagnetic energy. The waveguide also comprises a divider portion at an end of the feed portion that splits an energy path of the feed portion into a low-frequency portion configured to propagate the low-frequency electromagnetic energy and a high-frequency portion configured to propagate the high-frequency electromagnetic energy. The low-frequency portion comprises a low-pass filter portion proximate the divider portion that is configured to reject the high-frequency electromagnetic energy. The high-frequency portion comprises a high-pass filter portion proximate the divider portion configured to reject the low-frequency electromagnetic energy.

In some implementations, a distance between the low-pass filter portion and the divider portion is configured to control in-phase conjunction of the high-frequency electromagnetic energy rejected by the low-pass filter portion with the high-frequency electromagnetic energy not rejected by the high-pass filter portion.

In some implementations, the divider portion may be configured such that the high-frequency portion is connected to the divider portion at a right angle from the feed portion and the low-frequency portion. The high-frequency portion may also comprise a bend such that it is substantially parallel to at least a portion of the low-frequency portion.

In some implementations, the low-frequency portion further comprises an array of low-frequency antennas and the high-frequency portion further comprises a high-frequency antenna.

In some implementations, the low-frequency electromagnetic energy is configured for medium and long-range detections and the high-frequency electromagnetic energy is configured for short-range detections with high range-resolution.

In some implementations, the low-pass filter portion comprises a notch in a wall of the low-frequency portion. The notch may be rectangular, trapezoidal, or have curved walls.

In some implementations, the waveguide is a substrate-integrated waveguide, SIW, formed of conductive vias disposed through a dielectric substrate. In such implementations, the high-pass filter portion may comprise a filter wall offset from a wall of the high-frequency portion. The filter wall may be curved.

In some implementations, the waveguide is an air waveguide, AWG, formed of conductive walls surrounding a dielectric (e.g., vacuum or air). In such implementations, the high-pass filter portion may comprise multiple irises. The irises may be in a row.

This Summary introduces simplified concepts of a multi-mode radar system with high isolation between modes that is further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

A multi-mode radar system with high isolation between modes is described with reference to the following drawings that use some of the same numbers throughout to reference like or examples of like features and components.
Fig. 1 illustrates, in accordance with this disclosure, an example environment where a multi-mode radar system with high isolation between modes may be used.
Fig. 2 illustrates, in accordance with this disclosure, an example of a portion of the radar system of Fig. 1.
Fig. 3 illustrates, in accordance with this disclosure, an example of the portion of the radar system of Fig. 2 where the modes comprise different frequencies.
Fig. 4 illustrates, in accordance with this disclosure, an example of the portion of the radar system of Fig. 3 implemented in an SIW.
Fig. 5 illustrates, in accordance with this disclosure, an example of the portion of the radar system of Fig. 3 implemented in an AWG.
Fig. 6 illustrates, in accordance with this disclosure, examples of feeding networks that may be used with the AWG of Fig. 5.
Fig. 7 illustrates, in accordance with this disclosure, an example method of forming and implementing the waveguides of Figs. 4 and 5.

### DETAILED DESCRIPTION

Many radar systems and waveguides are configured for single-mode use (e.g., a single frequency, a single polarization, and/or a single field of view). As such, in systems where multiple modes are desired (e.g., multiple frequencies, multiple polarizations, and/or multiple fields of view), multiple radar systems or waveguides (or paths within waveguides) may be used with respective feed ports and associated components (e.g., integrated circuit channels). Each additional mode (other than the first) requires more space (e.g., due to feed ports) and increases cost/complexity of the system (e.g., due to separate feeding circuitry).

A multi-mode radar system with high isolation between modes is described herein. The radar system comprises a feed portion configured to propagate electromagnetic energy along an energy path. Connected to the feed portion is a divider portion that splits the energy path into a first energy path corresponding to first antennas and a second energy path corresponding to second antennas. The second antennas have one or more of: different operating frequencies, different polarizations, or different fields of view than the first antennas.

By using respective filters in the first and second-antenna portions, the radar system achieves multi-mode capability (e.g., muti-frequency, multi-polarization, and/or multi-field-of-view) with high isolation. Using a single feed port to do so may save cost, have lower complexity, and allow for better space utilization. For example, a single antenna channel (e.g., monolithic microwave integrated circuit (MNΠC) channel) may be used to interface with the multi-mode radar system.

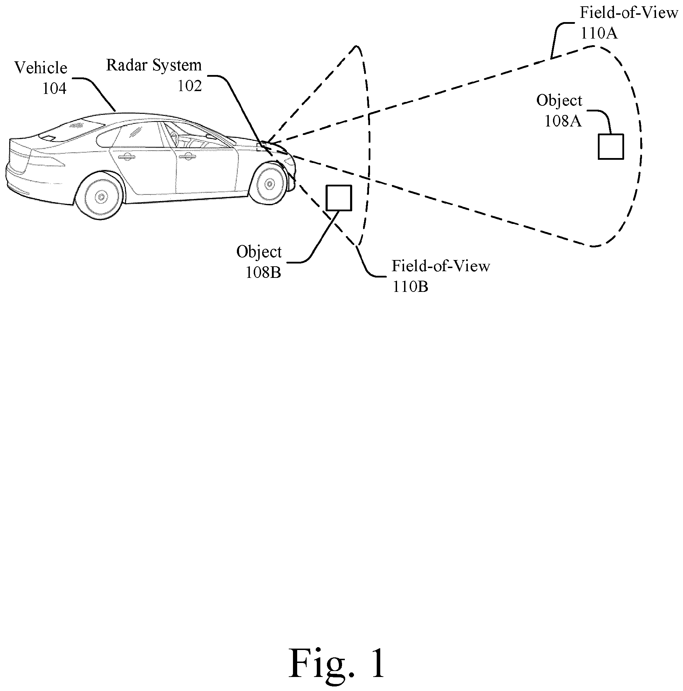

Fig. 1 illustrates an example environment 100 where a multi-mode radar system with high isolation between modes may be used. The example environment 100 contains a radar system 102 that is disposed within, disposed on, or dispersed throughout a vehicle 104. The radar system 102 may contain a waveguide 106 (not shown) that may be used by the radar system 102 to perform various sensing tasks related to objects 108 that are within fields-of-view 110 of the radar system 102. For example, the radar system 102 may determine an azimuth angle to object 108A, which is within field-of-view 110A, and a distance to object 108B, which is within field-of-view 110B.

Although illustrated as a car, the vehicle 104 may represent other types of motorized vehicles (e.g., a motorcycle, a bus, a tractor, a semi-trailer truck, construction equipment), non-motorized vehicles (e.g., a bicycle), railed vehicles (e.g., a train or a trolley car), watercraft (e.g., a boat or a ship), aircraft (e.g., an airplane or a helicopter), or spacecraft (e.g., satellite). In general, manufacturers may mount the radar system 102 to any moving platform, including moving machinery or robotic equipment. In other implementations, other devices (e.g., desktop computers, tablets, laptops, televisions, computing watches, smartphones, gaming systems) may incorporate the radar system 102 with the waveguide 106 and support techniques described herein.

The radar system 102 also includes one or more processors (not illustrated) and computer-readable storage media (CRM) (not illustrated). The processor may be a microprocessor or a system-on-chip. The processor executes instructions stored within the CRM. As an example, the processor controls the operation of a transmitter (not illustrated) that is connected to the waveguide 106. The processor may also process signals (EM energy) received via the waveguide 106 and determine information about the objects 108. The processor may also generate radar data for the automotive systems. For example, the processor controls or directs operations of an autonomous or semi-autonomous driving system of the vehicle 104. In some implementations, the radar system 102 may include a MMIC that interfaces with the waveguide 106.

In the example environment 100, the radar system 102 may detect and track the objects 108 by operating in different frequency modes, polarizations, and fields of view For example, a low-frequency mode may use low-frequency radar signals (e.g., 76.5 gigahertz (GHz)) and a horizontally polarized antenna array to create the field-of-view 110A with a wide azimuth and a long range (e.g., configured for medium and long-range detections). Ahigh-frequency mode may use high-frequency radar signals (e.g., 80 GHz) and a vertically polarized antenna to create the field-of-view 110A with a wide elevation and good distance resolution (e.g., configured for short-range detections). The low-frequency mode may be used, for example, as an imaging radar while the high-frequency mode may, for example, be used as a parking sensor. It should be noted that the low-frequency mode could use a single and/or vertically polarized antenna(s) and that the high-frequency mode could use an antenna array and/or horizontally polarized antenna(s). Furthermore, the respective operating frequencies may vary without departing from the scope of this disclosure. Low and high-frequency are defined in terms of each other. In other words, the low-frequency signals are simply those that have lower frequencies than the high-frequency signals.

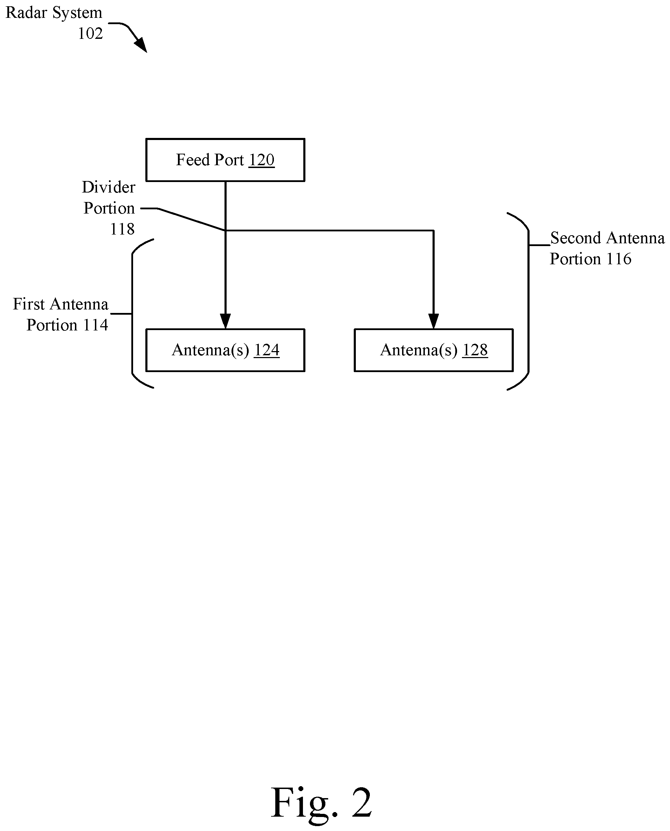

Fig. 2 illustrates an example of a portion of the radar system 102. The radar system 102 provides electromagnetic energy paths. The energy paths are formed between a feed port 120 that is configured to interface with a transmitter/receiver (e.g., MMIC) and antenna(s) 124 and antenna(s) 128. A divider portion 118 divides the energy path to each of the antennas (e.g., via a first antenna portion 114 and a second antenna portion 116. Thus, the radar system 102 has a first energy path and a second energy path. The antenna(s) 124 may have a first frequency band, a first polarization, and/or a first field of view The antenna(s) 128 may have a second frequency band, a second polarization, and/or a second field of view

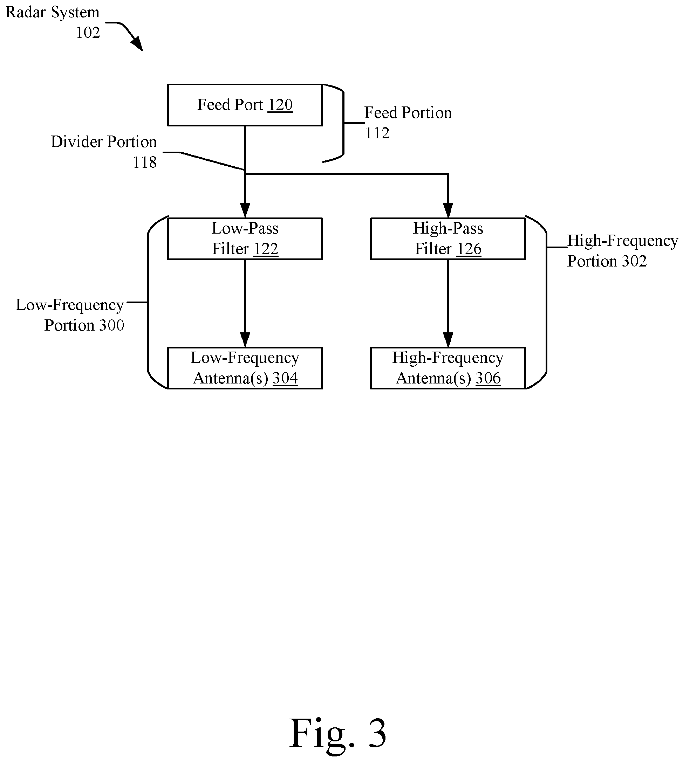

Fig. 3 illustrates an example of the portion of the radar system 102 of Fig. 2 where the modes comprise different frequencies. The energy paths are formed by a feed portion 112, a low-frequency portion 300, and a high-frequency portion 302 with the divider portion 118 dividing the energy path of the feed portion 112 into an energy path of the low-frequency portion 300 and an energy path of the high-frequency portion 302. Thus, the radar system 102 has a low-frequency energy path and a high-frequency energy path. The feed portion 112 contains the feed port 120 that is configured to interface with a transmitter/receiver (e.g., MNΠC).

The low-frequency portion 300 contains a low-pass filter 122 and low-frequency antenna(s) 304. The low-pass filter 122 is configured to block high-frequency radar signals (e.g., those related to the high-frequency portion 302) from entering the low-frequency portion 300 and ultimately from reaching the low-frequency antenna(s) 304. The low-pass filter 122 may be further configured to reflect the high-frequency radar signals that are blocked into the high-frequency portion 302.

The high-frequency portion 302 contains a high-pass filter 126 and high-frequency antenna(s) 306. The high-pass filter 126 is configured to block low-frequency radar signals (e.g., those related to the low-frequency portion 300) from entering the high-frequency portion 302 and ultimately from reaching the high-frequency antenna(s) 306.

The radar system 102 may have a desired bandwidth and adequate isolation. For example, the radar system 102 may have a bandwidth of at least 5 GHz while achieving cross-polarization isolation of at least 15 decibels (dB) (20 dB when implemented in an air waveguide (AWG)). Furthermore, the low-pass filter 122 may reflect the high-frequency energy back to the high-frequency portion 302 such that it has a gain of at least 4 dB.

By using the radar system 102, a single MMIC channel may interface with respective antenna elements corresponding to multiple modes using a single feed port. Doing so allows for cost savings and lower complexity of the overall system while also reducing space.

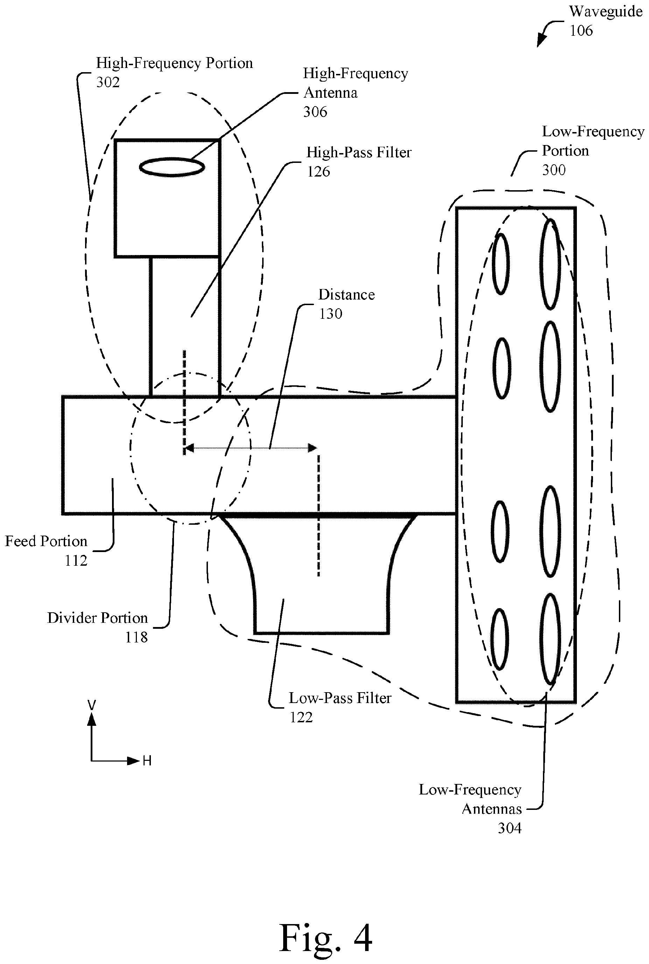

Fig. 4 illustrates an example of the portion of the radar system 102 of Fig. 3 implemented in the waveguide 106, where the waveguide 106 is an SIW. In the illustrated example, the waveguide 106 is formed of conductive vias disposed in patterns within a dielectric substrate (e.g., of a printed circuit board (PCB)). The vias form conductive walls and, along with the top and bottom metallic layers in a PCB, form the EM energy path(s).

As discussed above, the waveguide 106 has a feed portion 112 (the feed port 120 is not illustrated), the low-frequency portion 300, the high-frequency portion 302, and the divider portion 118 that form the energy paths to the respective antennas. The divider portion 118 splits the energy path of the feed portion 112 into an energy path of the low-frequency portion 300 and an energy path of the high-frequency portion 302.

The low-frequency portion 300 contains the low-pass filter 122 and the low-frequency antennas 304. In the illustrated example, the low-frequency antennas 304 are configured as an array of horizontally polarized antennas (e.g., in the "h" direction). The low-frequency antennas 304 may be, for example, configured for a wide azimuth field-of-view and for angle finding. Although the antenna section is illustrated as a center-fed waveguide, the low-frequency antennas 304 may be end fed, horizontally polarized, or otherwise configured differently.

The low-pass filter 122 is configured to keep high-frequency EM energy (e.g., that corresponding to the high-frequency portion 302) from reaching the low-frequency antennas 304. To do so, the low-pass filter 122 may reject the high-frequency EM energy and reflect it back through the divider portion 118 for combination with the high-frequency EM energy in the high-frequency portion 302. A distance 130 from a center of the low-pass filter 122 to the divider portion 118 is configured to control in-phase conjunction of the reflected/rejected high-frequency EM energy and the high-frequency EM energy that is allowed/not rejected in the high-frequency portion 302.

The low-pass filter 122 may be configured as a notch filter (as illustrated). The notch filter may be rectangular or non-rectangular. A bottom wall of the low-pass filter 122 may be parallel to a portion of the low-frequency portion 300 (as illustrated). Side walls of the low-pass filter 122 may be square with the bottom wall (e.g., meet at right angles) or meet the bottom wall at an angle other than 90 degrees (e.g., obtuse angles). When obtuse angles are used, the low-pass filter 122 may be trapezoidal in shape. Furthermore, the side walls may be curved such that they meet a main channel wall of the low-frequency portion 300 at tangent angles. Furthermore, the width and depth of the notch filter may vary based on implementation.

The high-frequency portion 302 may meet the divider portion 118 at a right angle (as illustrated). The high-frequency portion 302 may then extend from the divider portion 118 at the right angle (e.g., as illustrated) or have a bend such that it shares a wall with the low-frequency portion 300 or is slightly offset from the wall of the low-frequency portion 300. The high-frequency portion 302, as illustrated, may be substantially parallel to a portion of the low-frequency portion 300. Doing so may enable better space utilization.

The high-frequency portion 302 contains the high-frequency antenna 306, which may be a single vertically polarized antenna (e.g., in the "v" direction, as illustrated). The high-frequency antenna 306 may be configured as part of a parking sensor due to a high elevation field-of-view and high range-resolution (e.g., 10 cm).

The high-pass filter 126 may be configured as a floating wall, e.g., filter wall, within the high-frequency portion 302 proximate the divider portion 118. The floating wall may follow an external wall of the high-frequency portion 302 (e.g., that which is not shared with the low-frequency portion 300) including any bends thereof. The spacing of the vias of the high-pass filter 126 may be configured according to application.

Fig. 4 illustrates an example of the portion of the radar system 102 of Fig. 3 implemented in the waveguide 106, where the waveguide 106 is an AWG. In the illustrated example, the waveguide 106 is formed of conductive walls surrounding a dielectric (e.g., vacuum or air).

As discussed above, the waveguide 106 has a feed portion 112 (the feed port 120 is not illustrated), the low-frequency portion 300, the high-frequency portion 302, and the divider portion 118 that form the energy paths to the respective antennas. The divider portion 118 splits the energy path of the feed portion 112 into an energy path of the low-frequency portion 300 and an energy path of the high-frequency portion 302.

The low-frequency portion 300 contains the low-pass filter 122 and the low-frequency antennas 304. In the illustrated example, the low-frequency antennas 304 are an in an array of horizontally polarized antennas. The low-frequency antennas 304 may be, for example, configured for a wide azimuth field-of-view and for angle finding.

In the illustrated example, the low-frequency antennas 304 are fed by a feeding network 500. The feeding network 500 may be configured in any way (e.g., bends, splits, iris) such that the output of the low-pass filter 122 is connected to each of the low-frequency antennas 304.

The low-pass filter 122 is configured to keep high-frequency EM energy (e.g., that corresponding to the high-frequency portion 302) from reaching the low-frequency antennas 304. To do so, the low-pass filter 122 may reject the high-frequency EM energy and reflect it back through the divider portion 118 for combination with the high-frequency EM energy in the high-frequency portion 302. The distance 130 from the center of the low-pass filter 122 to the divider portion 118, again, is configured to control in-phase conjunction of the reflected high-frequency EM energy and the high-frequency EM energy in the high-frequency portion 302.

The low-pass filter 122 may be configured as a notch filter (as illustrated). The notch filter may be rectangular or non-rectangular. A bottom wall of the low-pass filter 122 may be parallel to a portion of the low-frequency portion 300. Side walls of the low-pass filter 122 may be square with the bottom wall (e.g., meet at right angles), meet the bottom wall at an angle other than 90 degrees (e.g., obtuse angles), or be curved such that they meet a main channel wall of the low-frequency portion 300 at tangent angles. When obtuse angles are used, the low-pass filter 122 may be trapezoidal in shape. Furthermore, the width and depth of the notch filter may vary based on implementation.

The high-frequency portion 302 may meet the divider portion 118 at a right angle. The high-frequency portion 302 may then extend from the divider portion 118 at the right angle (e.g., be straight) or have a bend (as illustrated) such that it shares a wall with the low-frequency portion 300 or is close to the wall. Doing so may enable better space utilization.

The high-frequency portion 302 contains the high-frequency antenna 306 which may be a single vertically polarized antenna (as illustrated). The high-frequency antenna 306 may be used as a parking sensor in some implementations due to high elevation field-of-view and high range-resolution (e.g., 10 cm).

The high-pass filter 126 may be configured as a series of multiple irises within the high-frequency portion 302 or as a narrower profile than that exiting the divider portion 118 and/or entering the high-frequency antenna 306. The irises may be proximate the divider portion 118 (as illustrated) or closer to the high-frequency antenna 306. The number, size, and spacing of the irises 502 of the high-pass filter 126 may be configured according to application.

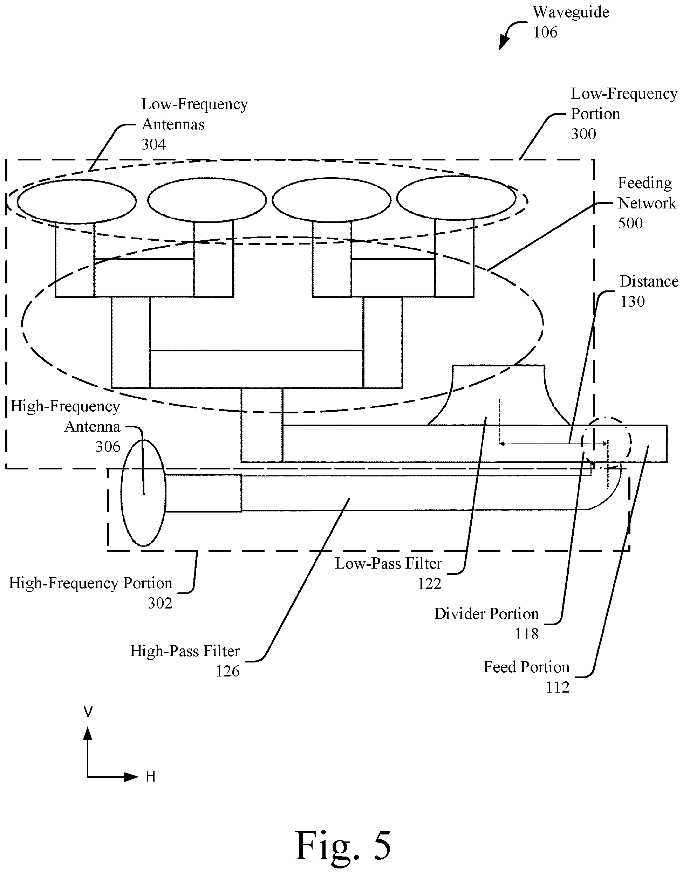

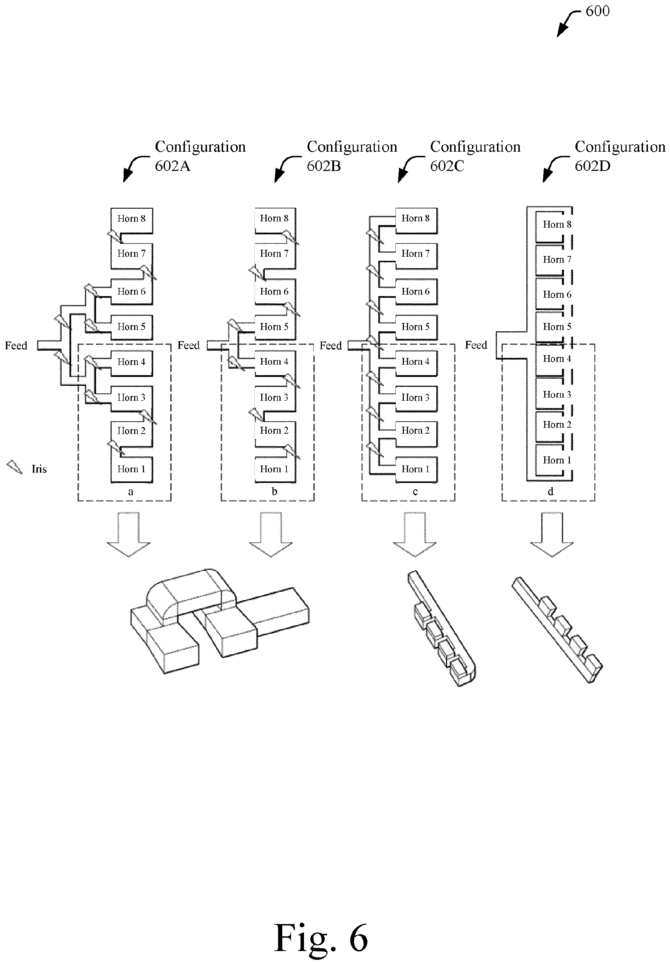

Fig. 6 illustrates, at 600, example feeding networks 500. As discussed above, the feeding network 500 connects a port of the low-pass filter 122 to the low-frequency antennas 304. Returning to Fig. 5, the feeding network 500 is configured as a 1-2-4 split. In other words, the portion of the feeding network 500 connected to the low-pass filter 122 is split into two paths. Each of those paths is then split again to create a path for each of the low-frequency antennas 304. If there were eight low-frequency antennas 304, there may be more splits (e.g., seven) to create paths for each antenna (e.g., a 1-2-4-8 split). Such a split configuration, however, takes up a lot of space, especially in the "v" direction.

Configurations 602 save space compared to a conventional 1-2-4-8 split. As illustrated, by placing the irises in different places, different configurations may be accomplished. Depending upon space requirements and other factors, each of the configurations 602 may be desirable. In the illustrated examples, "horn" or "h" is used to designate a specific low-frequency antenna 304. It should be noted, however, that the configurations 602 may be implemented in waveguides other than waveguide 106 (e.g., single mode waveguides).

Configuration 602A uses a conventional 1-2-4 split but then implements irises directly between horns 2 and 3 and horns 3 and 4 (on opposite sides of horn 3) to create the eight energy paths. Configuration 602B is similar to configuration 602A except that there is only a conventional 1-2 split with irises directly between horns 1 and 2, between horns 2 and 3, and between horns 3 and 4, with the irises alternating sides of the respective horns.

Configuration 602C is configured as a parallel branch feed. The horns are all fed by a single feeder with branches coming off of the feeder for each horn. Irises are placed between each of the branches. Configuration 602D is similar to 402C expect that the horns are attached directly to the single feeder without branches.

Configurations 602A-602D may enable more compact overall packaging of the waveguide 106 and other waveguides while still achieving good signal qualities. Doing so enables a smaller footprint of the radar system 102, which may enable space for other components or systems.

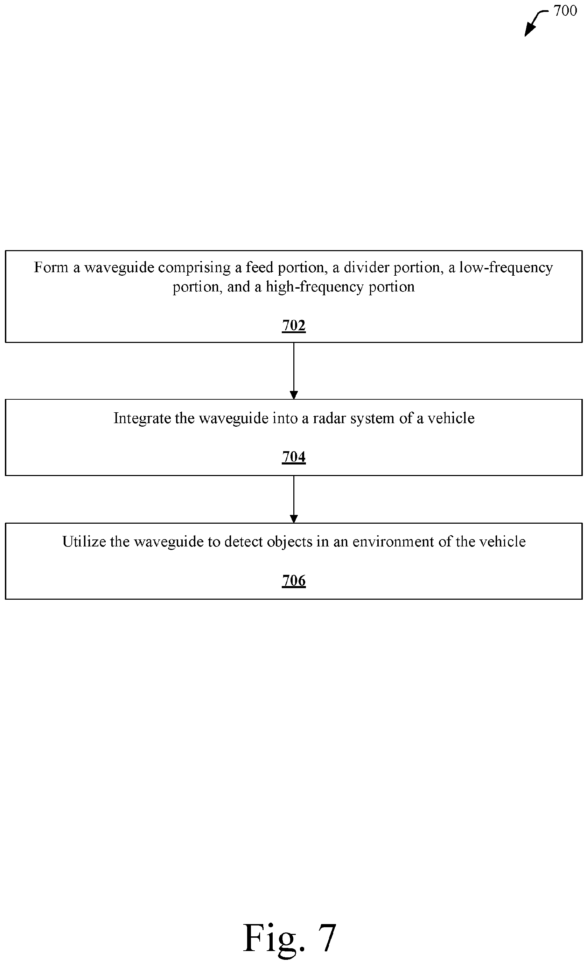

Fig. 7 illustrates an example method 700 of forming and implementing a multi-mode radar system with high isolation between modes. The order in which the operations are shown and/or described is not intended to be construed as a limitation, and the order may be rearranged without departing from the scope of this disclosure. Furthermore, any number of the operations can be combined with any other number of the operations to implement the example process flow or an alternate process flow

At step 702, a waveguide comprising a feed portion, a divider portion, a low-frequency portion, and a high-frequency portion is formed. For example, the waveguide 106 may be formed such that it contains the feed portion 112, the divider portion 118, the low-frequency portion 300, and the high-frequency portion 302. The low-frequency portion 300 may contain the low-pass filter 122 and the low-frequency antenna(s) 304, and the high-frequency portion 302 may contain the high-pass filter 126 and the high-frequency antenna(s) 306.

When implemented as a SIW, the waveguide 106 may be formed by forming vias within a substrate. For example, conductive materials may be deposited within a dielectric substrate to form a PCB with vias that form the waveguide 106.

When implemented as an AWG, the waveguide 106 may be formed of one or more pieces. For example, the waveguide 106 may be formed of multiple pieces that are adhered or bonded together (e.g., along a center plane). To do so, one or more pieces of the waveguide 106 may be formed using computer numeric control (CNC) machining, injection molding (e.g., metal injection molding), casting, 3D printing, or any other manufacturing process and may be formed of metal or plastic. As part of forming the waveguide 106, surfaces of the waveguide 106 may be metallized (e.g., if the waveguide 106 is formed of a non-conductive material). When formed of multiple pieces, the pieces may be glued/bonded (using a non-conductive adhesive), bolted, screwed (e.g., using one or more screws), snapped (e.g., using one or more snaps), welded, clamped using one or more clamps, press-fit, or any other assembly process known by those of ordinary skill in the art to form the waveguide 106.

At step 704, the waveguide 106 is integrated into a radar system of a vehicle. For example, the waveguide 106 may be integrated within the radar system 102 of the vehicle 104.

At step 706, the waveguide is utilized to detect objects in an environment of the vehicle. For example, the low-frequency portion 300 may be utilized to detect objects at far ranges and wide azimuth angles (e.g., field-of-view 110A). The high-frequency portion 302 may be utilized to detect objects at closer ranges with wide elevation angles and high-range resolution (e.g., field-of-view 110B). The applications of the respective frequencies may vary without departing from the scope of this disclosure.

Embodiment 1: A radar system comprising: a feed portion configured to propagate electromagnetic energy along an energy path; a divider portion connected to the feed portion that splits the energy path into a first energy path and a second energy path; a first antenna portion comprising one or more first antennas connected to the first energy path; and a second antenna portion comprising one or more second antennas connected to the second energy path, the second antennas having one or more of: different operating frequencies than the first antennas, different polarizations than the first antennas, or different fields of view than the first antennas.

Embodiment 2: The radar system of example 1, wherein the second antennas have different operating frequencies than the first antennas.

Embodiment 3: The radar system of any preceding embodiment, further comprising a first filter portion in the first energy path configured to reject electromagnetic energy associated with the second antennas.

Embodiment 4: The radar system of embodiment 3, wherein the first filter portion comprises a low-pass filter portion.

Embodiment 5: The radar system of embodiment 4, wherein the low-pass filter portion comprises a notch in a wall of the first antenna portion.

Embodiment 6: The radar system of embodiment 5, wherein the notch is rectangular, trapezoidal, or comprises side walls that are curved.

Embodiment 7: The radar system of any preceding embodiment, further comprising a second filter in the second energy path configured to reject electromagnetic energy associated with the first antennas.

Embodiment 8: The radar system of embodiment 7, wherein the second filter comprises a high-pass filter portion.

Embodiment 9: The radar system of embodiment 8, wherein the high-pass filter portion comprises a filter wall offset from a wall of the second antenna portion.

Embodiment 10: The radar system of embodiment 9, wherein the high-pass filter portion comprises a series of irises or a narrower profile than that of the second antenna portion exiting the divider portion.

Embodiment 11: The radar system of any preceding embodiment, wherein the feed portion, the divider portion, the first antenna portion, and the second antenna portion are comprised by a waveguide.

Embodiment 12: The radar system of any preceding embodiment, wherein the waveguide is a substrate-integrated waveguide, SIW, or an air waveguide, AWG.

Embodiment 13: The radar system of any preceding embodiment, wherein the divider portion is configured such that the second antenna portion is connected to the divider portion at a right angle from the feed portion and the first antenna portion.

Embodiment 14: A vehicle comprising: a radar system comprising: a feed portion configured to propagate electromagnetic energy along an energy path; a divider portion connected to the feed portion that splits the energy path into a first energy path and a second energy path; a first antenna portion comprising one or more first antennas connected to the first energy path; and a second antenna portion comprising one or more second antennas connected to the second energy path, the second antennas having one or more of: different operating frequencies than the first antennas, different polarizations than the first antennas, or different fields of view than the first antennas.

Embodiment 15: The vehicle of embodiment 14, wherein the vehicle is configured to use: the first antennas for medium or long-range object detection; and the second antennas as a short-range parking sensor.

While various implementations/embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims.

The use of "or" and grammatically related terms indicates non-exclusive alternatives without limitation unless the context clearly dictates otherwise. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A radar system comprising:
a feed portion configured to propagate electromagnetic energy along an energy path;
a divider portion connected to the feed portion that splits the energy path into a first energy path and a second energy path;
a first antenna portion comprising one or more first antennas connected to the first energy path; and
a second antenna portion comprising one or more second antennas connected to the second energy path, the second antennas having one or more of: different operating frequencies than the first antennas, different polarizations than the first antennas, or different fields of view than the first antennas.

2. The radar system of claim 1, wherein the second antennas have different operating frequencies than the first antennas.

3. The radar system of any preceding claim, further comprising a first filter portion in the first energy path configured to reject electromagnetic energy associated with the second antennas.

4. The radar system of claim 3, wherein the first filter portion comprises a low-pass filter portion.

5. The radar system of claim 4, wherein the low-pass filter portion comprises a notch in a wall of the first antenna portion.

6. The radar system of claim 5, wherein the notch is rectangular, trapezoidal, or comprises side walls that are curved.

7. The radar system of any preceding claim, further comprising a second filter in the second energy path configured to reject electromagnetic energy associated with the first antennas.

8. The radar system of claim 7, wherein the second filter comprises a high-pass filter portion.

9. The radar system of claim 8, wherein the high-pass filter portion comprises a filter wall offset from a wall of the second antenna portion.

10. The radar system of claim 9, wherein the high-pass filter portion comprises a series of irises or a narrower profile than that of the second antenna portion exiting the divider portion.

11. The radar system of any preceding claim, wherein the feed portion, the divider portion, the first antenna portion, and the second antenna portion are comprised by a waveguide.

12. The radar system of any preceding claim, wherein the waveguide is a substrate-integrated waveguide, SIW, or an air waveguide, AWG.

13. The radar system of any preceding claim, wherein the divider portion is configured such that the second antenna portion is connected to the divider portion at a right angle from the feed portion and the first antenna portion.

14. A vehicle comprising:
a radar system comprising:
a feed portion configured to propagate electromagnetic energy along an energy path;
a divider portion connected to the feed portion that splits the energy path into a first energy path and a second energy path;
a first antenna portion comprising one or more first antennas connected to the first energy path; and
a second antenna portion comprising one or more second antennas connected to the second energy path, the second antennas having one or more of: different operating frequencies than the first antennas, different polarizations than the first antennas, or different fields of view than the first antennas.

15. The vehicle of claim 14, wherein the vehicle is configured to use:
the first antennas for medium or long-range object detection; and
the second antennas as a short-range parking sensor.
